# EUROPEAN PATENT APPLICATION

(11) **EP 4 645 874 A1**
(43) Date of publication of application: **05.11.2025**
(21) Application number: 23914837.2
(22) Date of filing: 02.01.2023
(51) Int. Cl.: H04N 21/43, H04N 21/462, H04N 21/436, H04N 21/466, H04N 21/4402

(54) **VIDEO TRANSMISSION DEVICE AND OPERATING METHOD THEREOF**

(71) Applicant: LG Electronics Inc., Yeongdeungpo-gu Seoul 07336 (KR)
(72) Inventor: KWON, Sung Min, Seoul 06772 (KR)
(74) Representative: Schott, Jakob Valentin
(86) International application number: PCT/KR2023/000047
(87) International publication number: WO 2024/147371

(57) **Abstract**

A video transmission device according to an embodiment of the present disclosure may comprise: a wireless communication interface for allowing wireless communication with an external device; an external input interface for receiving a video signal from the outside; and a processor for determining, on the basis of the received video signal, the genre of a video corresponding to the video signal, determining, according to the determined genre, the resolution and frame rate of the video to be transmitted to the external device, and transmitting, through the wireless communication interface, the video having the determined resolution and frame rate to the external device.

## Description

### [Technical Field]

The present disclosure relates to a video transmission device, and more specifically, to a video transmission device for transmitting a video received from an external source to an external device.

### [Background Art]

The Screen Link (room-to-room share) feature is an image sharing feature between TVs connected to the same network.

In other words, the Screen Link function allows you to continue watching an image you were watching on the main TV on the sub TV.

The Screen Link function can provide a convenient situation where you can continue watching a drama you were watching on the main TV in the living room through the sub TV in the bedroom.

Recently, devices have appeared that transmit video to a sub-TV through a separate electronic device instead of the TV.

Conventional electronic devices currently use a method of transmitting video with an HD resolution lower than FHD.

This causes a degradation in image quality compared to the general FHD resolution, but when using the FHD resolution, a problem occurs where judder occurs in situations where the screen is switched quickly, so the resolution is fixed and used as above.

However, even for videos with slow screen transitions, there is a problem that image quality deterioration may occur when the video is transmitted to a sub TV in HD resolution.

### [Disclosure]

### [Technical Problem]

An object of the present disclosure is to provide a video transmission device that recognizes the genre of a video through artificial intelligence and transmits a video having a resolution suitable for the recognized genre.

An object of the present disclosure is to provide a video transmission device capable of transmitting a video with optimal image quality according to the genre of the video.

An object of the present disclosure is to provide a video transmission device capable of transmitting a video with optimal image quality according to the genre of the video and the performance of an external device.

### [Technical Solution]

According to an embodiment of the present disclosure, a video transmission device may include a wireless communication interface performing wireless communication with an external device; an external input interface receiving a video signal from the outside; and a processor determining a genre of a video corresponding to the video signal based on the received video signal, determining a resolution and a frame rate of the video to be transmitted to the external device according to the determined genre, and transmitting the video having the determined resolution and frame rate to the external device through the wireless communication interface.

### [Advantageous Effect]

According to various embodiments of the present disclosure, by utilizing the genre recognition function of the video, in the case of a genre with fast screen transitions such as movies or sports, the occurrence of judder can be prevented by transmitting the video in HD (720p, 60Hz) quality.

Additionally, for genres other than movies or sports, such as news or dramas where screen transitions are not fast, better quality video can be provided by transmitting the video in FHD (1080p, 30Hz) quality.

According to an embodiment of the present disclosure, a video having an appropriate image quality can be transmitted to an external device based on performance information of the external device and the genre of the video signal. Accordingly, a user can watch a video having an optimal image quality that matches the specifications and genre of the external device.

### [Description of Drawings]

Fig. 1 is a block diagram illustrating a configuration of a display device according to an embodiment of the present disclosure.
Fig. 2 is a block diagram illustrating a remote control device according to an embodiment of the present disclosure.
Fig. 3 is a view illustrating an actual configuration of a remote control device according to an embodiment of the present disclosure.
Fig. 4 is a view illustrating an example of utilizing a remote control device according to an embodiment of the present disclosure.
Figs. 5a to 5c are views illustrating a display system according to an embodiment of the present disclosure.
Fig. 6 is a block diagram illustrating a configuration of a video transmission device according to an embodiment of the present disclosure.
Fig. 7 is a ladder diagram for explaining an operation method of a display system according to one embodiment of the present disclosure.
Fig. 8 is a view illustrating an example of detecting a genre of a video using a genre detection model according to an embodiment of the present disclosure.
Fig. 9 is a ladder diagram for explaining an operating method of a display system according to another embodiment of the present disclosure.
Fig. 10 is a view illustrating a process for obtaining a motion vector according to an embodiment of the present disclosure.
Fig. 11 is a view for explaining an operation method of a display system according to another embodiment of the present disclosure.
Fig. 12 is a view illustrating a reference table considering the genre of a video and the size of a motion vector according to one embodiment of the present disclosure.
Fig. 13 is a ladder diagram for explaining an operating method of a display system according to another embodiment of the present disclosure.

### [Best Mode]

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present disclosure is an intelligent display device that adds a computer-assisted function to, for example, a broadcast reception function, and while remaining faithful to the broadcast reception function, adds an Internet function or the like and may have a more convenient interface such as a manual input device, a touch screen, or a space remote control. In addition, with the support of wired or wireless Internet functions, it is possible to connect to the Internet and a computer, and perform functions such as email, web browsing, banking, or games. A standardized general-purpose OS may be used for these various functions.

Accordingly, the display device described in the present disclosure may perform various user-friendly functions, for example, since various applications may be freely added or deleted on a general-purpose OS kernel. More specifically, the display device may be, for example, a network TV, an HBBTV, a smart TV, an LED TV, an OLED TV, or the like and in some cases, may also be applied to a smartphone.

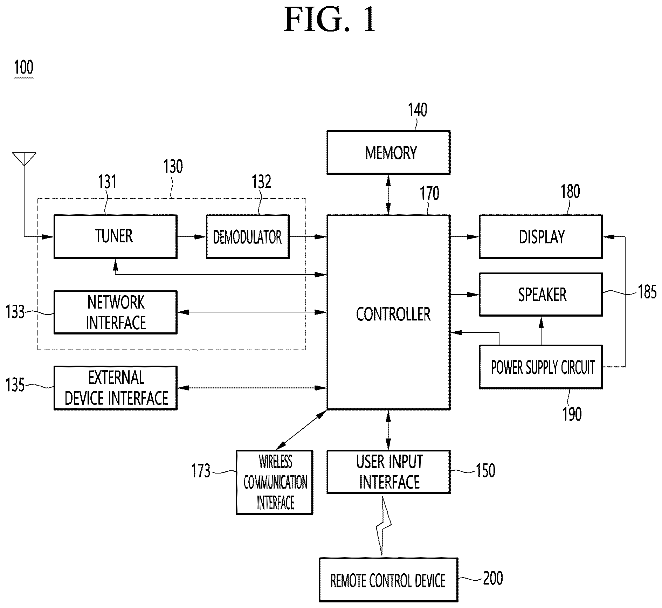

Fig. 1 is a block diagram illustrating a configuration of a display device according to an embodiment of the present disclosure.

Referring to Fig. 1, a display device 100 may include a broadcast reception part 130, an external device interface 135, a memory 140, a user input interface 150, a controller 170, a wireless communication interface 173, a display 180, a speaker 185, and a power supply circuit 190.

The broadcast reception part 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into image signals, audio signals, and broadcast program-related data signals, and may restore the divided image signals, audio signals, and data signals into an output available form.

The external device interface 135 may receive an application or an application list in an adjacent external device and deliver the application or the application list to the controller 170 or the memory 140.

The external device interface 135 may provide a connection path between the display device 100 and an external device. The external device interface 135 may receive at least one of an image or audio outputted from an external device that is wirelessly or wiredly connected to the display device 100 and deliver the received image or the audio to the controller. The external device interface 135 may include a plurality of external input terminals. The plurality of external input terminals may include an RGB terminal, at least one High Definition Multimedia Interface (HDMI) terminal, and a component terminal.

An image signal of an external device inputted through the external device interface 135 may be outputted through the display 180. A sound signal of an external device inputted through the external device interface 135 may be outputted through the speaker 185.

An external device connectable to the external device interface 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface 133 may access a predetermined webpage through an accessed network or another network linked to the accessed network. In other words, the network interface 133 may transmit or receive data to or from a corresponding server by accessing a predetermined webpage through the network.

The network interface 133 may receive content or data provided from a content provider or a network operator. In other words, the network interface 133 may receive content, such as movies, advertisements, games, VODs, and broadcast signals, which are provided from the content provider or the network operator, and information relating thereto through the network.

In addition, the network interface 133 may receive firmware update information and update files provided from the network operator, and may transmit data to the Internet or content provider or the network operator.

The network interface 133 may select and receive a desired application among applications open to the air, through network.

The memory 140 may store signal-processed image, voice, or data signals stored by a program in order for each signal processing and control in the controller 170.

In addition, the memory 140 may perform a function for temporarily storing image, voice, or data signals output from the external device interface 135 or the network interface 133, and may store information on a predetermined image through a channel memory function.

The memory 140 may store an application or an application list input from the external device interface 135 or the network interface 133.

The display device 100 may play content files (e.g., video files, still image files, music files, document files, application files, etc.) stored in the memory 140, and may provide the content files to a user.

The user input interface 150 may transmit signals input by a user to the controller 170, or may transmit signals from the controller 170 to a user. For example, the user input interface 150 may receive or process control signals such as power on/off, channel selection, and screen setting from the remote control device 200 or transmit control signals from the controller 170 to the remote control device 200 according to various communication methods such as Bluetooth, Ultra Wideband (WB), ZigBee, Radio Frequency (RF), and IR communication methods.

In addition, the user input interface 150 may transmit, to the controller 170, control signals input from local keys (not illustrated) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface 135.

Voice signals processed by the controller 170 may be output to the speaker 185. In addition, voice signals processed by the controller 170 may be input to the external output device through the external device interface 135.

Additionally, the controller 170 may control overall operations of the display device 100.

In addition, the controller 170 may control the display device 100 by a user command or an internal program input through the user input interface 150, and may access the network to download a desired application or application list into the display device 100.

The controller 170 may output channel information selected by a user together with the processed image or voice signals through the display 180 or the speaker 185.

In addition, the controller 170 may output image signals or voice signals of an external device such as a camera or a camcorder, which are input through the external device interface 135, through the display 180 or the speaker 185, according to an external device image playback command received through the user input interface 150.

Moreover, the controller 170 may control the display 180 to display images, and may control the display 180 to display broadcast images input through the tuner 131, external input images input through the external device interface 135, images input through the network interface, or images stored in the memory 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

Moreover, the wireless communication interface 173 may perform wired or wireless communication with an external device. The wireless communication interface 173 may perform short-range communication with an external device. For this, the wireless communication interface 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication interface 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication interface 173 may detect (or recognize) a wearable device capable of communication around the display device 100.

Furthermore, if the detected wearable device is a device authenticated to communicate with the display device 100, the controller 170 may transmit at least part of data processed in the display device 100 to the wearable device through the wireless communication interface 173. Therefore, a user of the wearable device may use the data processed by the display device 100 through the wearable device.

The display 180 may convert image signals, data signals, or on-screen display (OSD) signals, which are processed in the controller 170, or images signals or data signals, which are received in the external device interface 135, into R, G, and B signals to generate driving signals.

Furthermore, the display device 100 illustrated in Fig. 1 is just one embodiment of the present disclosure and thus, some of the components illustrated may be integrated, added, or omitted according to the specification of the actually implemented display device 100.

In other words, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface 133 or the external device interface 135 and play them without including the tuner 131 and the demodulator 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to Fig. 1, an image processing device such as the separated set-top box, and a content playback device including the display 180 and the speaker 185.

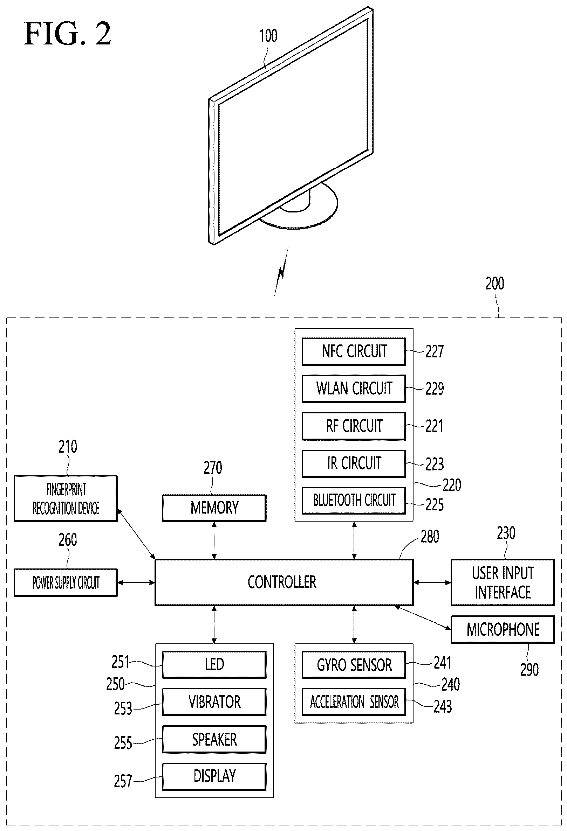

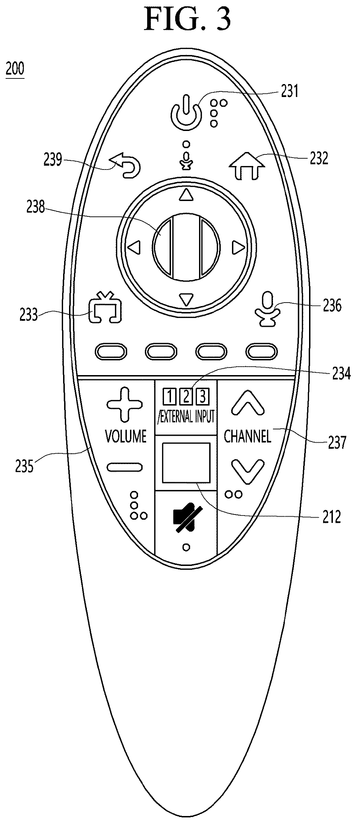

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition device 210, a wireless communication interface 220, a user input interface 230, a sensor 240, an output interface 250, a power supply circuit 260, a memory 270, a controller 280, and a microphone 290.

Referring to Fig. 2, the wireless communication interface 220 transmits/receives signals to/from an arbitrary any one of display devices according to the above-mentioned embodiments of the present disclosure.

The remote control device 200 may include a radio frequency (RF) circuit 221 capable of transmitting or receiving signals to or from the display device 100 according to an RF communication standard, and an IR circuit 223 capable of transmitting or receiving signals to or from the display device 100 according to an IR communication standard. In addition, the remote control device 200 may include a Bluetooth circuit 225 capable of transmitting or receiving signals to or from the display device 100 according to a Bluetooth communication standard. In addition, the remote control device 200 may include an NFC circuit 227 capable of transmitting or receiving signals to or from the display device 100 according to an NFC communication standard, and a wireless LAN (WLAN) circuit 229 capable of transmitting or receiving signals to or from the display device 100 according to a WLAN communication standard.

In addition, the remote control device 200 may transmit signals containing information on the movement of the remote control device 200 to the display device 100 through the wireless communication interface 220.

Moreover, the remote control device 200 may receive signals transmitted from the display device 100 through the RF circuit 221 and if necessary, may transmit a command for power on/off, channel change, and volume change to the display device 100 through the IR circuit 223.

The user input interface 230 may be configured with a keypad, a button, a touch pad, or a touch screen. A user may operate the user input interface 230 to input a command relating to the display device 100 to the remote control device 200. If the user input interface 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume control button 235 may be a button for controlling a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

Fig. 2 is described again.

If the user input interface 230 includes a touch screen, a user may touch a soft key of the touch screen to input a command relating to the display device 100 to the remote control device 200. In addition, the user input interface 230 may include various kinds of input interfaces operable by a user, for example, a scroll key and a jog key, and this embodiment does not limit the scope of the present disclosure.

The sensor 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display 180 of the display device 100.

The output interface 250 may output image or voice signals in response to the operation of the user input interface 230, or may output image or voice signals corresponding to signals transmitted from the display device 100.

A user may recognize whether the user input interface 230 is operated or the display device 100 is controlled through the output interface 250.

For example, the output interface 250 may include an LED 251 for flashing, a vibrator 253 for generating vibration, a speaker 255 for outputting sound, or a display 257 for outputting an image, if the user input interface 230 is manipulated or signals are transmitted/received to/from the display device 100 through the wireless communication interface 220.

Additionally, the power supply circuit 260 supplies power to the remote control device 200 and if the remote control device 200 does not move for a predetermined time, stops the power supply, so that power waste may be reduced.

The power supply circuit 260 may resume the supply of power if a predetermined key provided at the remote control device 200 is operated.

The memory 270 may store various kinds of programs and application data required to control or operate the remote control device 200.

If the remote control device 200 transmits/receives signals wirelessly through the display device 100 and the RF circuit 221, the remote control device 200 and the display device 100 transmits/receives signals through a predetermined frequency band.

The controller 280 of the remote control device 200 may store, in the memory 270, information on a frequency band for transmitting/receiving signals to/from the display device 100 paired with the remote control device 200 and refer to it.

The controller 280 controls general matters relating to the control of the remote control device 200. The controller 280 may transmit a signal corresponding to a predetermined key operation of the user input interface 230 or a signal corresponding to the movement of the remote control device 200 sensed by the sensor 240 to the display device 100 through the wireless communication interface 220.

In addition, the microphone 290 of the remote control device 200 may acquire voice.

A plurality of microphones 290 may be provided.

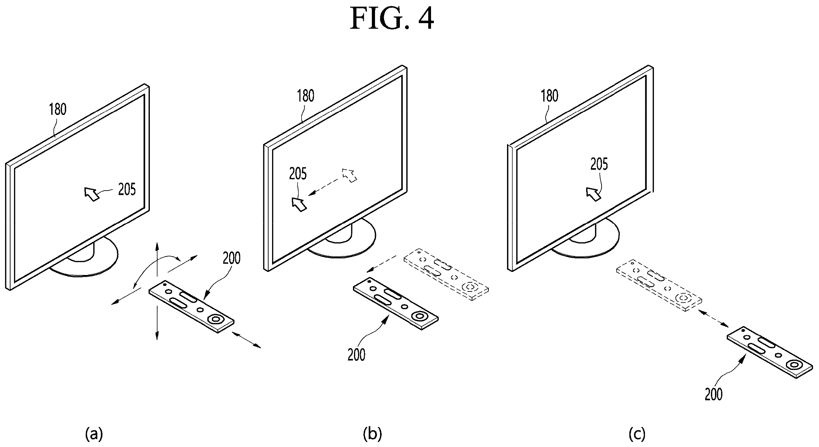

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display 180.

A user may move or rotate the remote control device 200 vertically or horizontally. The pointer 205 displayed on the display 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display 180. Thus, a selected region in the display 180 corresponding to the pointer 205 may be zoomed in and displayed in an enlarged size.

On the other hand, if a user moves the remote control device 200 close to the display 180, a selection area in the display 180 corresponding to the pointer 205 may be zoomed out and displayed in a reduced size.

On the other hand, if the remote control device 200 is moved away from the display 180, a selection area may be zoomed out and if the remote control device 200 is moved closer to the display 180, a selection area may be zoomed in.

Additionally, if a specific button in the remote control device 200 is pressed, recognition of a vertical or horizontal movement may be excluded. In other words, if the remote control device 200 is moved away from or closer to the display 180, the up, down, left, or right movement maynot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display 180 and also may be displayed in correspondence to a plurality of points such as a line and a surface.

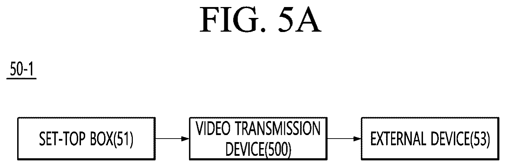

Figs. 5a to 5c are views illustrating a display system according to an embodiment of the present disclosure.

The video transmission device 500 described below may be a device that transmits portable media content.

Referring to Fig. 5a, a display system 50-1 according to one embodiment of the present disclosure may include a set-top box 51, a video transmission device 500, and an external device 53.

The set-top box 51 can transmit one or more of a video signal and an audio signal to a video transmission device 500.

The set-top box 51 and the video transmission device 500 can communicate via wired or wireless means.

For example, a set-top box 51 can transmit a video signal to a video transmission device 500 via RF communication.

As another example, a set-top box 51 can transmit a video signal to a video transmission device 500 via an HDMI cable.

The video transmission device 500 can transmit one or more of the video signals and audio signals received from the set-top box 51 to an external device 53.

An external device 53 can output one or more of a video signal and an audio signal received from a video transmission device 500.

An external device 53 can display the received video signal on a display.

The external device 53 may include all components of the display device 100 illustrated in Fig. 1.

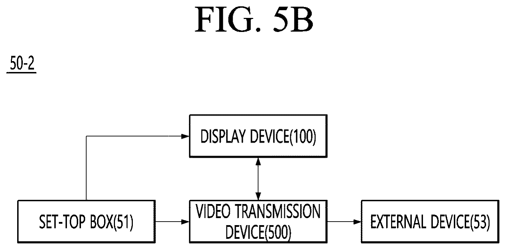

Next, Fig. 5b is described.

Referring to Fig. 5b, a display system 50-2 according to another embodiment of the present disclosure may include a set-top box 51, a display device 100, a video transmission device 500, and an external device 53.

The set-top box 51 can transmit one or more of a video signal and an audio signal to either a video transmission device 500 or a display device 100.

The set-top box 51 and the video transmission device 500 can communicate via wired or wireless means.

For example, a set-top box 51 can transmit a video signal to a video transmission device 500 via RF communication.

As another example, a set-top box 51 can transmit a video signal to a video transmission device 500 via an HDMI cable.

The video transmission device 500 can transmit one or more of the video signals and audio signals received from the set-top box 51 to the display device 100 and the external device 53.

The display device 100 can display a video signal received from a video transmission device 500 on the display 180.

Additionally, the external device 53 can display the received video signal on a display.

Accordingly, each of the display device 100 and the external device 53 can display the same video.

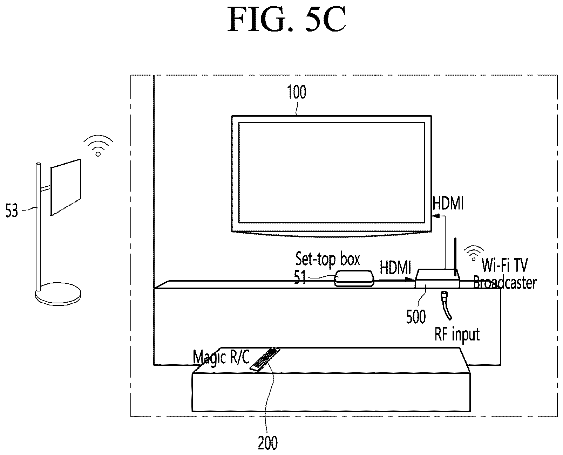

Fig. 5c is a view illustrating an actual implementation example of the display system 50-2 of Fig. 5b.

Referring to Fig. 5c, the set-top box 51 can transmit a video signal to a video transmission device 500 via HDMI.

The video transmission device 500 can transmit the received video signal to the display device 100 via HDMI and simultaneously transmit the received video signal to an external device 53 via wireless communication.

The video transmission device 500 and the external device 53 can perform Wi-Fi communication.

In another embodiment, the video transmission device 500 may transmit an RF video signal received via an RF input interface to an external device 53.

Users can watch broadcast images based on RF video signals through an external device 53 even without a display device 100 with a large screen.

The external device 53 may be a device having a stand, a support, and a display.

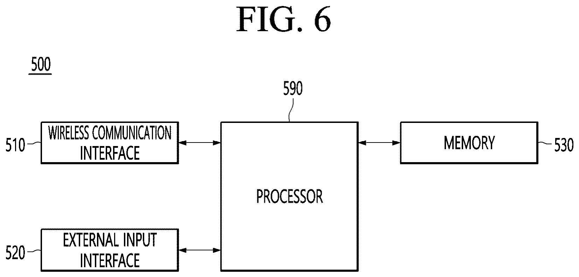

Fig. 6 is a block diagram illustrating a configuration of a video transmission device according to an embodiment of the present disclosure.

Referring to Fig. 6, the video transmission device 500 may include a wireless communication interface 510, an external input interface 520, a memory 530, and a processor 590.

The wireless communication interface 510 can perform wireless communication with an external device 53.

The wireless communication interface 510 may include one or more of a WiFi communication circuit and a Bluetooth communication circuit.

The external input interface 520 may include one or more HDMIs for receiving video signals from a set-top box 51.

The external input interface 520 may have an RF receiver (not illustrated) that receives RF signals from an external server or broadcast station.

The memory 530 stores programs for each signal processing and control within the processor 590 and can store processed images, voices, or data signals.

The memory 530 may perform a function for temporary storage of image, voice, or data signals input to a wireless communication interface 510 or an external input interface 520, and may also store information about a specific image through a channel memory function.

The memory 530 can store an application or a list of applications input from a wireless communication interface 510 or an external input interface 520.

The processor 590 can control the overall operation of the video transmission device 500.

The specific operation of the processor 590 will be described later.

Meanwhile, when the resolution of the video to be transmitted to the external device 53 is determined below, a frame rate matching the determined resolution can be automatically determined.

In other words, the frame rate of the video can also be automatically determined according to the resolution of the video.

Accordingly, the determination of the resolution and frame rate of the video can be replaced by the determination of the resolution of the video.

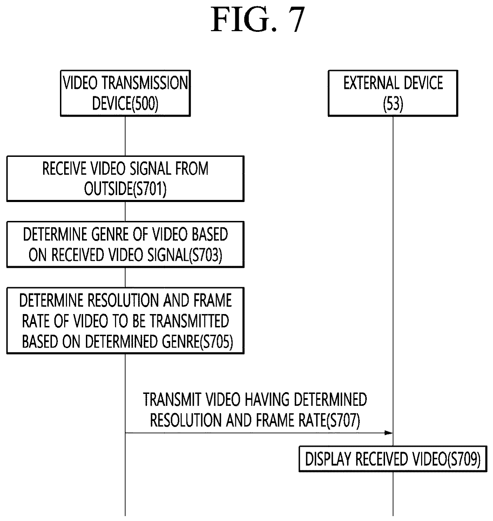

Fig. 7 is a ladder diagram for explaining an operation method of a display system according to one embodiment of the present disclosure.

Referring to Fig. 7, **the processor 590 of the video transmission device 500 receives a video signal through an external input interface 520 (S701).**

In one embodiment, the processor 590 can receive a video signal from a set-top box 51 via HDMI provided in an external input interface 520.

In another embodiment, the processor 590 may receive a video signal via an RF receiver provided in the external input interface 520.

**The processor 590 of the video transmission device 500 determines the genre of the video corresponding to the video signal based on the received video signal (S703).**

The processor 590 can determine the genre of a video from a video signal using a genre detection model based on an artificial intelligence neural network.

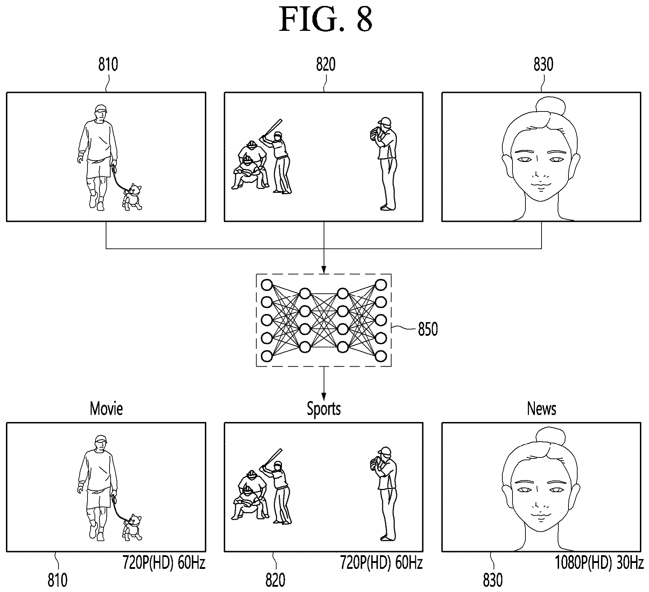

This is explained with reference to Fig. 8.

Fig. 8 is a view illustrating an example of detecting a genre of a video using a genre detection model according to an embodiment of the present disclosure.

Referring to Fig. 8, a genre detection model 850 based on an artificial neural network learned using a deep learning algorithm or a machine learning algorithm is illustrated.

The genre detection model 850 may be stored in the processor 590 or memory 530 of the video transmission device 500.

The video transmission device 500 can receive a genre detection model 850 from an external artificial intelligence server.

The genre detection model 850 may be a model that infers the genre of a video by using information included in a video signal. The information included in the video signal may include one or more of a video title, a video description, a thumbnail image, and a voice.

The genre detection model 850 may be a model learned through supervised learning.

A training data set for learning a genre detection model 850 may include training video information and correct answer data labeled with the training video information.

Information about a learning video may include one or more of the video's title, description, thumbnail image, and voice.

The correct answer data can be labeling data indicating the genre matching the training video information.

The genre detection model 850 can be trained with the goal of accurately inferring labeling data representing genres from training video information.

A feature vector is extracted from the video information for learning, and the extracted feature vector is input to a genre detection model 850 so that a target feature vector can be output.

The genre detection model 850 can be trained to minimize a loss function representing the difference between a target feature vector and a vector corresponding to correct data.

Referring to Fig. 8, a first video signal 810, a second video signal 820, and a third video signal 830 can each be input to the genre detection model 850.

Each video signal 810 may include one or more of a video title, a description, a thumbnail image, and voice.

The genre detection model 850 can detect the genre of the first video signal 810 as a movie, the genre of the second video signal 820 as sports, and the genre of the third video signal 830 as news.

Again, Fig. 7 is explained.

**The processor 590 of the video transmission device 500 determines the resolution and frame rate of the video to be transmitted according to the determined genre of the video (S705).**

The processor 590 can determine the resolution of the video to be transmitted to the external device 53 as the first resolution and the frame rate as the first frame rate when the genre of the video is the first type of genre.

The first type of genre could be a genre that belongs to a video with fast screen transitions, such as movies or sports.

The first resolution can be 720p and the first frame rate can be 60Hz.

The processor 590 can determine the resolution of the video to be transmitted to the external device 53 as the second resolution and the frame rate as the second frame rate when the genre of the video is the second type of genre.

The second type of genre could be a genre that belongs to videos with slow screen transitions, such as news and dramas.

The second resolution can be 1080p and the second frame rate can be 30Hz.

The above description only describes two genre types, but these are only examples.

The processor 590 may store resolutions and frame rates matching each type of genre in the memory 530.

The memory 530 may store a reference table that matches the type, resolution and frame rate of the genre.

When the genre of the video is detected, the processor 590 can use the reference table to read out the resolution and frame rate matching the genre.

Referring to Fig. 8, if the genre of the first video signal 810 is recognized as a movie according to the genre detection model 850, the processor 590 may determine the resolution of the first video signal 810 to be 720p and the frame rate to be 60 Hz.

If the genre of the second video signal 820 is recognized as sports according to the genre detection model 850, the processor 590 may determine the resolution of the second video signal 820 to be 720p and the frame rate to be 60Hz.

If the genre of the third video signal 830 is recognized as news according to the genre detection model 850, the processor 590 may determine the resolution of the third video signal 830 to be 1080p and the frame rate to be 30 Hz.

Again, Fig. 7 is explained.

**The processor 590 of the video transmission device 500 transmits a video having a determined resolution and frame rate to an external device 53 through a wireless communication interface 510 (S707).**

The processor 590 can transmit a video having a determined resolution and frame rate to an external device 53 through a Wi-Fi communication circuit included in the wireless communication interface 510.

The processor 590 can convert the original resolution of the video into a determined resolution and transmit information about the video having the converted resolution and the determined frame rate to an external device 53.

**An external device 53 displays a video received from a video transmission device 500 on a display (S709).**

An external device 53 can output video having a specific resolution received from a video transmission device 500 to a display according to information about the received frame rate.

In this way, the video transmission device 500 according to the embodiment of the present disclosure can prevent the occurrence of judder by transmitting video in HD (720p, 60Hz) quality in the case of genres with fast screen transitions such as movies or sports by utilizing the video genre recognition function.

Additionally, for genres other than movies or sports, such as news or dramas where screen transitions are not fast, better quality video can be provided by transmitting the video in FHD (1080p, 30Hz) quality.

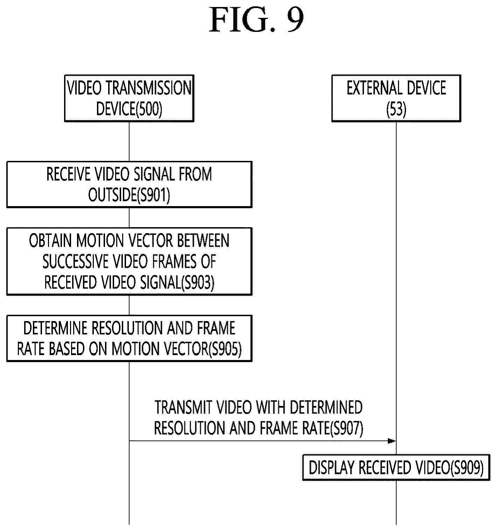

Fig. 9 is a ladder diagram for explaining an operating method of a display system according to another embodiment of the present disclosure.

Referring to Fig. 9, the processor 590 of the video transmission device 500 receives a video signal through an external input interface 520 (S901).

In one embodiment, the processor 590 can receive a video signal from a set-top box 51 via HDMI provided in an external input interface 520.

In another embodiment, the processor 590 may receive a video signal via an RF receiver provided in the external input interface 520.

**The processor 590 of the video transmission device 500 obtains a motion vector between consecutive video frames of the received video signal (S903).**

The processor 590 can obtain a motion vector representing movement between an object included in a first video frame and the object included in a second video frame following the first video frame.

A motion vector can be a vector representing the movement of the same object between successive video frames in terms of horizontal displacement and vertical displacement.

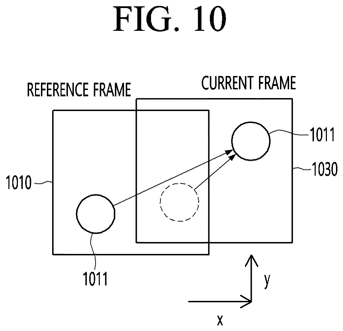

Fig. 10 is a view illustrating a process for obtaining a motion vector according to an embodiment of the present disclosure.

Referring to Fig. 10, a reference frame 1010 and a current frame 1030 immediately following the reference frame 1010 are illustrated.

The reference frame 1010 may include an object 1011. The object 1011 may be a reference for calculating a motion vector.

The processor 590 can obtain a motion vector based on a first position of an object 1011 included in a reference frame 1010 and a second position of an object 1011 included in a current frame 1030.

Each of the first position and the second position can be expressed in terms of an x-coordinate and a y-coordinate.

The processor 590 can calculate a motion vector based on the difference between the first position and the second position.

Again, Fig. 9 is explained.

**The processor 590 of the video transmission device 500 determines the resolution and frame rate of the video to be transmitted based on the obtained motion vector (S905).**

If the size of the motion vector is equal to or greater than a preset size, the processor 590 can determine the resolution of the video to be transmitted to the external device 53 as the first resolution and the frame rate as the first frame rate.

If the size of the motion vector is equal to or greater than a preset size, the video may be a video with fast screen transitions, such as movies or sports.

The first resolution can be 720p and the first frame rate can be 60Hz.

If the size of the motion vector is less than a preset size, the processor 590 can determine the resolution of the video to be transmitted to the external device 53 as the second resolution and the frame rate as the second frame rate.

If the size of the motion vector is smaller than the preset size, the video may be a video with slow screen transitions, such as news or dramas.

The second resolution can be 1080p and the second frame rate can be 30Hz.

The processor 590 may store a resolution and frame rate matching the size of the motion vector in the memory 530.

The memory 530 may store a reference table that matches the size, resolution, and frame rate of the motion vector.

When the size of a motion vector is detected, the processor 590 can use a reference table to read out the resolution and frame rate matching the genre.

**The processor 590 of the video transmission device 500 transmits a video having a determined resolution and frame rate to an external device 53 through a wireless communication interface 510 (S907).**

The processor 590 can transmit a video having a determined resolution and frame rate to an external device 53 through a Wi-Fi communication circuit included in the wireless communication interface 510.

The processor 590 can convert the original resolution of the video into a determined resolution and transmit information about the video having the converted resolution and the determined frame rate to an external device 53.

**An external device 53 displays a video received from a video transmission device 500 on a display (S909).**

An external device 53 can output video having a specific resolution received from a video transmission device 500 to a display according to information about the received frame rate.

In this way, the video transmission device 500 according to the embodiment of the present disclosure can prevent the occurrence of judder by transmitting video in HD (720p, 60Hz) quality in the case of genres with fast screen transitions such as movies or sports by using the motion vector of the video signal.

Additionally, for genres other than movies or sports, such as news or dramas where screen transitions are not fast, better quality video can be provided by transmitting the video in FHD (1080p, 30Hz) quality.

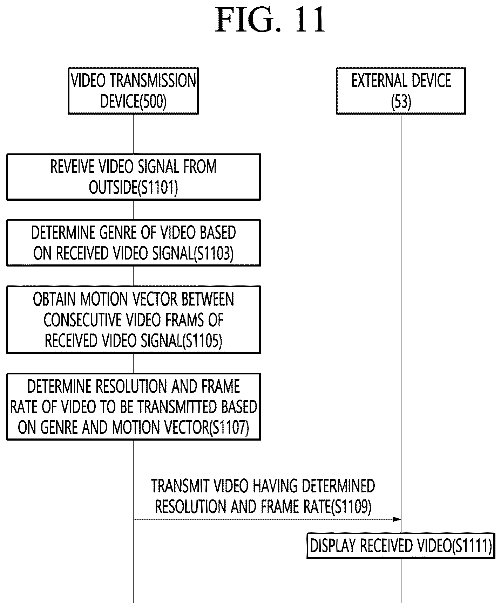

Fig. 11 is a view for explaining an operation method of a display system according to another embodiment of the present disclosure.

**The processor 590 of the video transmission device 500 receives a video signal through an external input interface 520 (S1101).**

**The processor 590 of the video transmission device 500 determines the genre of the video corresponding to the video signal based on the received video signal (S1103).**

The processor 590 can determine the genre of a video from a video signal using the genre detection model 850 described in the embodiment of Fig. 8.

**The processor 590 of the video transmission device 500 obtains a motion vector between consecutive video frames of the received video signal (S1105).**

The processor 590 can obtain a motion vector representing movement between an object included in a first video frame and the object included in a second video frame following the first video frame.

The processor 590 can calculate motion vectors between video frames using the embodiment of Fig. 10.

**The processor 590 of the video transmission device 500 determines the resolution and frame rate of the video to be transmitted based on** the **determined genre of the video and the obtained motion vector (S1107).**

In one embodiment, the processor 590 may determine the resolution of the video to be transmitted as the first resolution and the frame rate as the first frame rate when the determined genre of the video is a first type of genre and the size of the motion vector is equal to or greater than a preset size.

The first type of genre could be a genre that belongs to a video with fast screen transitions, such as movies or sports.

The first resolution can be 720p and the first frame rate can be 60Hz.

In another embodiment, the processor 590 may determine the resolution of the video to be transmitted as the second resolution and the frame rate as the second frame rate when the determined genre of the video is the first type of genre and the size of the motion vector is less than a preset size.

The second resolution can be 1080p and the second frame rate can be 30Hz.

The first resolution may be lower than the second resolution, and the first frame rate may be higher than the second frame rate.

In other words, the processor 590 can determine the resolution of the video to be transmitted as the second resolution and the frame rate as the second frame rate if the screen transition of the video is not fast even if the genre of the video is the first type of genre, taking into account the size of the motion vector.

In another embodiment, the processor 590 may determine the resolution of the video to be transmitted as the first resolution and the frame rate as the first frame rate when the determined genre of the video is a second type of genre and the size of the motion vector is equal to or greater than a preset size.

The second type of genre could be a genre that belongs to videos with slow screen transitions, such as news and dramas.

In other words, the processor 590 can determine the resolution of the video to be transmitted as the first resolution and the frame rate as the first frame rate when the screen transition of the video is fast, considering the size of the motion vector even if the genre of the video is the second type of genre.

In another embodiment, the processor 590 may determine the resolution of the video to be transmitted as the second resolution and the frame rate as the second frame rate if the determined genre of the video is a second type of genre and the size of the motion vector is equal to or greater than a preset value.

In this way, the processor 590 can determine the resolution and frame rate of the video by giving more priority to the size of the motion vector than the genre of the video.

This is because even if the video genre is a movie or sports, the screen transitions may not be fast.

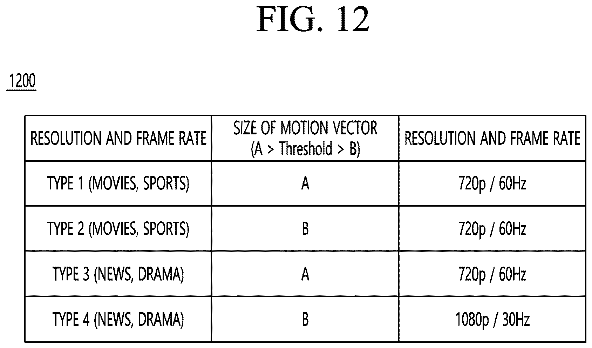

Fig. 12 is a view illustrating a reference table considering the genre of a video and the size of a motion vector according to one embodiment of the present disclosure.

The reference table 1200 may be stored in the memory 530 of the video transmission device 500.

The reference table 1200 may be a table that matches the genre of the video, the size of the motion vector, and the resolution/frame rate.

It is assumed that the size A of the motion vector is greater than a preset value (Threshold), and B is less than a preset value (Threshold).

The processor 590 can obtain the genre of the video and the size of the motion vector, and use the reference table 1200 to determine the resolution and frame rate to be transmitted to the external device 53.

The processor 590 can determine the resolution and frame rate of the video as 720p/60Hz, regardless of the genre of the video, if the size of the motion vector is greater than a preset value.

The processor 590 may determine the resolution and frame rate of the video as 720p/60Hz or 1080p/30Hz according to the genre of the video when the size of the motion vector is smaller than a preset value.

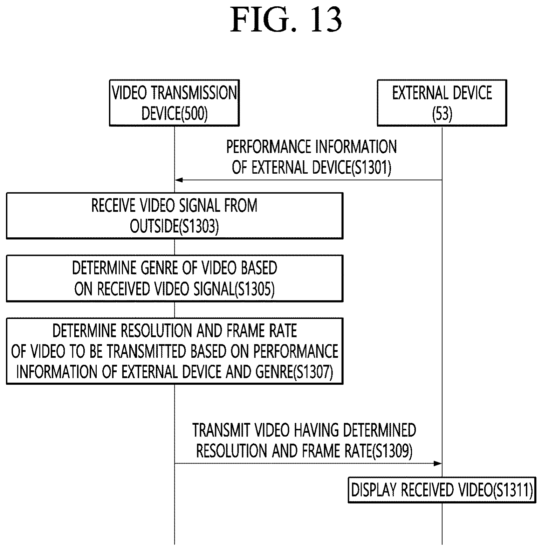

Fig. 13 is a ladder diagram for explaining an operating method of a display system according to another embodiment of the present disclosure.

In particular, Fig. 13 is an example of determining the resolution of a video to be transmitted based on performance information and genre of an external device 53.

Referring to Fig. 13, **the processor 590 of the video transmission device 500 receives performance information of an external device 53 from an external device 53 connected via a wireless communication interface 510 (S1301).**

In one embodiment, the performance information of the external device 53 may include one or more of the size of the display provided in the external device 53 or the supportable resolution of the display.

The size of the display may include information about the inches of the screen.

The display's supportable resolution may include resolution spec information supported by the display of an external device 53, such as SD, HD, FHD, and UHD.

When a Wi-Fi connection is established with an external device 53, the processor 590 can request performance information from the external device 53 and receive performance information of the external device 53 in response to the request.

**The processor 590 of the video transmission device** 500 **receives a video signal through an external input interface 520 (S1303).**

**The processor 590 of the video transmission device 500 determines the genre of the video corresponding to the video signal based on the received video signal (S1305).**

The processor 590 can determine the genre of a video from a video signal using the genre detection model 850 described in the embodiment of Fig. 8.

**The processor 590 of the video transmission device 500 determines the resolution and frame rate of the video to be transmitted based on the performance information and genre of the external device 53 (S1307).**

In one embodiment, the processor 590 may determine the resolution and frame rate of the video to be transmitted based on the determined genre of the video if the external device 53 supports a first reference resolution (HD resolution) or higher.

In another embodiment, the processor 590 may determine the resolution of the video to be transmitted as the second reference resolution, regardless of the genre of the video, if the external device 53 supports a resolution lower than HD. The second reference resolution may be SD (480p) resolution.

In one embodiment, the processor 590 may determine the resolution and frame rate of the video to be transmitted based on the determined genre of the video when the screen size of the external device 53 is equal to or larger than a preset size.

In one embodiment, the processor 590 may determine the resolution of the video to be transmitted as the second reference resolution, regardless of the genre of the video, when the screen size of the external device 53 is less than a preset size. The second reference resolution may be an SD (480p) resolution.

**The processor 590 of the video transmission device 500 transmits a video having a determined resolution and frame rate to an external device 53 through a wireless communication interface 510 (S1309).**

**An external device 53 displays a video received from a video transmission device 500 on a display (S1311).**

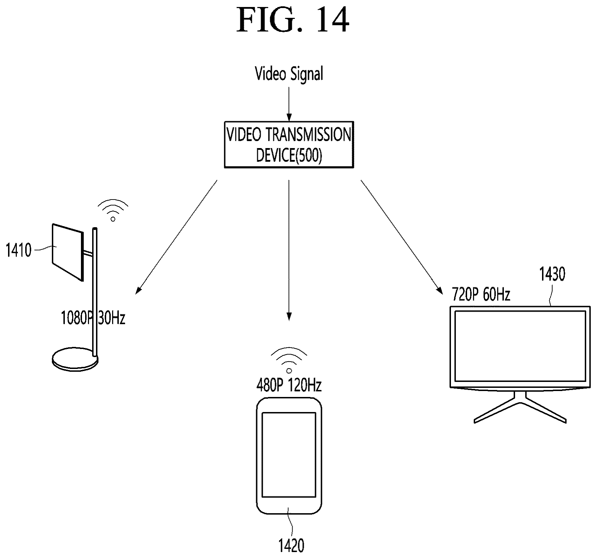

Fig. 14 is a view illustrating an embodiment of determining a resolution of a video to be transmitted based on performance information and a genre of an external device according to one embodiment of the present disclosure, and transmitting a video having the determined resolution to an external device.

Referring to Fig. 14, it is assumed that the resolution supported by each display of the first external device 1410 and the third external device 1430 is equal to or higher than the HD resolution, and the resolution supported by the display of the second external device 1420 is lower than the HD resolution.

When a connection is established with a first external device 1410, the video transmission device 500 can receive performance information of the first external device 1410 from the first external device 1410.

The performance information of the first external device 1410 may include information about the screen size of the first external device 1410 and the resolution supported by the display of the first external device 1410.

The video transmission device 500 can determine the genre of a video signal input from the outside when the supported resolution of the first external device 1410 is HD resolution or higher.

The video transmission device 500 can transmit a video of 1080p/30Hz to the first external device 1410 when the genre of the video signal is the second type of genre.

When a connection is established with a second external device 1420, the video transmission device 500 can receive performance information of the second external device 1420 from the second external device 1420.

The performance information of the second external device 1420 may include information about the screen size of the second external device 1420 and the resolution supported by the display of the second external device 1420.

The video transmission device 500 can transmit a 480p/120Hz video to the second external device 1430 regardless of the genre of the video signal input from the outside when the supported resolution of the second external device 1420 is SD resolution or higher. 480p/120Hz can correspond to SD resolution.

When a connection is established with a third external device 1430, the video transmission device 500 can receive performance information of the third external device 1430 from the third external device 1430.

The performance information of the third external device 1430 may include information about the screen size of the third external device 1430 and the resolution supported by the display of the third external device 1430.

The video transmission device 500 can determine the genre of a video signal input from an external part when the supported resolution of the third external device 1430 is SD resolution or higher.

The video transmission device 500 can transmit a 720p/60Hz video to a third external device 1430 when the genre of the video signal is the first type of genre.

In this way, according to an embodiment of the present disclosure, the video transmission device 500 can transmit a video having an appropriate image quality to an external device based on performance information of the external device and the genre of the video signal.

Accordingly, users can watch videos with optimal image quality that suits the specifications and genre of the external device.

According to one embodiment of the present disclosure, the above-described method can be implemented as a processor-readable code on a medium in which a program is recorded. Examples of the processor-readable medium include a ROM, a RAM, a CD-ROM, a magnetic tape, a floppy disk, an optical data storage device, and the like.

The display device described above is not limited to the configuration and method of the embodiments described above, and the embodiments may be configured by selectively combining all or part of the embodiments so that various modifications can be made.

## Claims

1. A video transmission device, comprising:
a wireless communication interface performing wireless communication with an external device;
an external input interface receiving a video signal from the outside; and
a processor determining a genre of a video corresponding to the video signal based on the received video signal, determining a resolution and a frame rate of the video to be transmitted to the external device according to the determined genre, and transmitting the video having the determined resolution and frame rate to the external device through the wireless communication interface.

2. The video transmission device of claim 1,
wherein the processor,
when the genre of the video is determined as the first type genre with fast screen transition, determines the resolution and frame rate of the video as the first resolution and the first frame rate, and when the genre of the video is determined as the second type genre other than the first type genre, determines the resolution and frame rate of the video as the second resolution and the second frame rate,
wherein the first resolution is lower than the second resolution, and
wherein the first frame rate is higher than the second frame rate.

3. The video transmission device of claim 1, further comprising:
a memory storing an artificial neural network-based genre detection model that detects the genre of the video from information included in the video signal,
wherein the processor detects the genre of the video using the output result of the genre detection model.

4. The video transmission device of claim 1,
wherein the processor obtains a motion vector between successive frames of the video signal, and determines the resolution and the frame rate of the video to be transmitted based on the genre and the motion vector.

5. The video transmission device of claim 4,
wherein the processor,
when the genre of the video is a first type genre with fast screen transition and the size of the motion vector is equal to or greater than a preset size, determines the resolution of the video to be transmitted as the first resolution and the frame rate as the first frame rate.

6. The video transmission device of claim 5,
wherein the processor,
when the genre of the video is the first type genre and the size of the motion vector is less than the preset size, determines the resolution of the video to be transmitted as the second resolution and the frame rate as the second frame rate,
wherein the first resolution is lower than the second resolution, and
wherein the first frame rate is higher than the second frame rate.

7. The video transmission device of claim 6,
wherein the processor,
when the genre of the video is the second type genre and the size of the motion vector is equal to or greater than the preset size, determines the resolution of the video to be transmitted as the first resolution and the frame rate as the first frame rate.

8. The video transmission device of claim 7,
wherein the processor,
when the genre of the video is the second type genre and the size of the motion vector is less than the preset size, determines the resolution of the video to be transmitted as the second resolution and the frame rate as the second frame rate.

9. The video transmission device of claim 1,
wherein the processor receives performance information of the external device from the external device through the wireless communication interface, and
wherein the performance information includes at least one of the screen size of the external device or the resolution of the external device.

10. The video transmission device of claim 9,
wherein the processor determines the resolution of the video to be transmitted to the external device based on the performance information of the external device and the genre of the video.

11. The video transmission device of claim 10,
wherein the processor,
when the resolution of the external device is equal to or greater than the first reference resolution, determines the resolution of the video to be transmitted to the external device based on the genre of the video.

12. The video transmission device of claim 11,
wherein the processor,
when the resolution of the external device is less than the first reference resolution, determines the resolution of the video to be transmitted to the external device as the second reference resolution, regardless of the genre of the video.

13. The video transmission device of claim 1,
wherein the wireless communication interface includes a Wi-Fi communication circuit for Wi-Fi communication.

14. The video transmission device of claim 1,
wherein the external input interface includes an RF receiver for receiving one or more HDMI and RF video signals.

15. A method for operating a video transmission device, comprising:
receiving a video signal;
determining a genre of a video corresponding to the video signal based on the received video signal;
determining a resolution and a frame rate of the video to be transmitted to an external device according to the determined genre; and
transmitting the video having the determined resolution and frame rate to the external device.
